# EUROPEAN PATENT APPLICATION

(11) **EP 4 009 233 A1**
(43) Date of publication of application: **08.06.2022**
(21) Application number: 19940238.9
(22) Date of filing: 09.10.2019
(51) Int. Cl.: G06K 9/62

(54) **FEATURE PREDICTION METHOD AND SYSTEM, AND ENGINE**

(30) Priority: 05.08.2019 CN 201910716917
(71) Applicant: Wangsu Science & Technology Co., Ltd., Shanghai 200030 (CN)
(72) Inventor: SHEN, Jianfa, Shanghai 200030 (CN); LIN, Li, Shanghai 200030 (CN)
(74) Representative: De Arpe Tejero, Manuel
(86) International application number: PCT/CN2019/110153
(87) International publication number: WO 2021/022660

(57) **Abstract**

The present disclosure discloses a feature prediction method, system and engine. The method includes: receiving a feature prediction request carrying input data, and recognizing sub-requests included in the feature prediction request; selecting a prediction model matching each of the sub-requests respectively, and predicting the input data by means of the selected prediction model respectively to obtain a prediction result corresponding to each of the sub-requests; and fusing the prediction result corresponding to each of the sub-requests according to a preset fusion algorithm to obtain and display a final prediction result of the feature prediction request. Technical solutions provided by the present disclosure can improve accuracy of feature prediction.

## Description

### TECHNICAL FIELD

The present disclosure relates to the field of Internet technology, and more particularly, to a feature prediction method, system and engine.

### BACKGROUND

With the rapid development of technologies such as cloud computing, big data, artificial intelligence, and the continuous maturity of various application scenarios, more and more data need to be uploaded to cloud for processing, which brings considerable work load to the cloud. To reduce the work load of the cloud, and also because more and more applications require faster response speed, edge intelligence emerged. The edge intelligence may enable collection, processing, analysis, and decision-making processes of most data to be completed on a side close to a data source, such that the work load of the cloud is greatly reduced. Furthermore, a faster response speed may be obtained because of a closer distance to the data source.

When the current edge intelligence is used for feature prediction, only a single model can be used for the prediction generally. However, in actual applications, prediction of a plurality of features may likely be required for the same data. In this case, generally the existing edge intelligence has lower accuracy when performing the feature prediction.

### SUMMARY

An objective of the present disclosure is to provide a feature prediction method, system and engine, which can improve accuracy of feature prediction.

To achieve the above objective, one aspect of the present disclosure provides a feature prediction method, the method includes: receiving a feature prediction request carrying input data, and recognizing sub-requests included in the feature prediction request; selecting a prediction model matching each of the sub-requests respectively, and predicting the input data by means of the selected prediction model respectively to obtain a prediction result corresponding to each of the sub-requests; and fusing the prediction result corresponding to each of the sub-requests according to a preset fusion algorithm to obtain and display a final prediction result of the feature prediction request.

To achieve the above-mentioned objective, another aspect of the present disclosure also provides a feature prediction system. The system includes an application layer, a model layer, a platform layer, and a resource layer. The application layer is configured to receive a feature prediction request carrying input data, recognize sub-requests included in the feature prediction request, and display a final prediction result of the feature prediction request. The model layer is configured to select a prediction model matching each of the sub-requests respectively, and predict the input data by means of the selected prediction model respectively to obtain a prediction result corresponding to each of the sub-requests; and fuse the prediction result corresponding to each of the sub-requests according to a preset fusion algorithm to obtain a final prediction result of the feature prediction request. The platform layer is configured to create a corresponding task when training each of the prediction models and predicting the input data by means of the selected prediction model respectively, and assign required computing resources to the created task; wherein the computing resources at least include CPU resources, GPU resources, and memory resources. The resource layer is configured to count current computing resources and provide the computing resources to a corresponding task in response to a scheduling request from the platform layer.

To achieve the foregoing objective, still another aspect of the present disclosure also provides a feature prediction engine. The feature prediction engine includes a processor and a memory. The memory is configured to store a computer program. When the computer program is executed by the processor, the above-mentioned feature prediction method is implemented.

As can be seen from the above technical solutions provided by the present disclosure, when a feature prediction request is received, sub-requests included in the feature prediction request may be recognized. Next, a prediction model matching each of the sub-requests may be selected from a plurality of prediction models obtained by pre-training, and each of the sub-requests may be respectively predicted by means of the selected prediction model, to obtain respective prediction results. Subsequently, to obtain the final prediction result of the feature prediction request, the obtained prediction results may be fused according to the preset fusion algorithm. In this way, by means of collaborative operation of the plurality of prediction models and the fusion of the plurality of prediction results, a prediction result with a higher precision can be obtained, and better meet the needs of edge intelligence.

### BRIEF DESCRIPTION OF THE DRAWINGS

To describe the technical solutions of embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic diagram of steps of a feature prediction method according to an embodiment of the present disclosure;
FIG. 2 is a schematic structural diagram of a feature prediction system according to an embodiment of the present disclosure;
FIG. 3 is a schematic flowchart of a feature prediction method according to an embodiment of the present disclosure; and
FIG. 4 is a schematic structural diagram of a feature prediction engine according to an embodiment of the present disclosure.

### DETAILED DESCRIPTION

To make the objectives, technical solutions and advantages of the present disclosure clearer, the embodiments of the present disclosure will be further described below in detail with reference to the accompanying drawings.

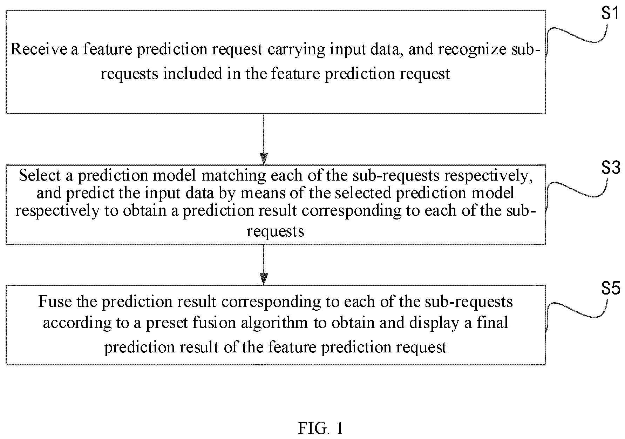

The present disclosure provides a feature prediction method, which may be applied to each edge node in an edge intelligent system, and may be applied to an electronic device having a data processing function. Referring to FIG. 1, the feature prediction method provided by the present disclosure may include following steps.

S1: receiving a feature prediction request carrying input data, and recognizing sub-requests included in the feature prediction request.

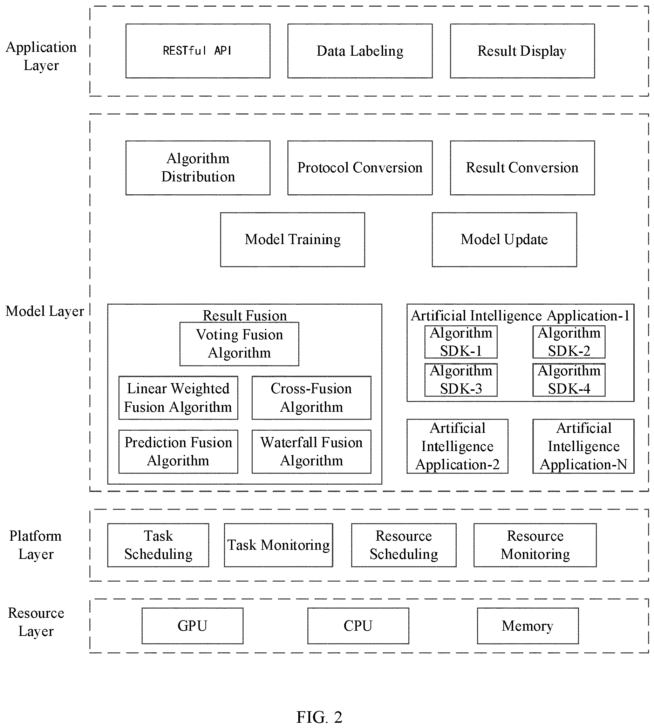

In this embodiment, referring to FIG. 2, a feature prediction system for performing the above feature prediction method may include a four-layer structure. Specifically, as shown in FIG. 2, the system may include an application layer, a model layer, a platform layer, and a resource layer. The application layer may provide an interface that can be accessed by an external device, such that the feature prediction request carrying the input data may be received by means of this interface. In actual applications, this interface may be a RESTful API module, which may be implemented in programming languages such as JAVA, C#, C/C++, and may adopt communication protocols such as HTTP(s).

In this embodiment, the input data for feature prediction may be data such as pictures or video frames, and the feature prediction request may be divided into various different types of requests according to different actual situations. For example, the feature prediction request may be a face feature prediction request, an environment feature prediction request, a target object prediction request, and the like. In practical applications, the feature prediction request received may be further subdivided into more types of sub-requests. For example, the face feature prediction request may include a 1:1 face verification request, a 1:N face verification request, a face location verification request, a face search request, a face control request, and so on. For another example, a prediction request of a target object may also be present in the face feature prediction request simultaneously. Specifically, when face recognition is performed, it is also necessary to recognize a certain object in environment where the face is positioned. In this way, the feature prediction request may be a collection of the sub-requests, and each of the sub-requests included therein may be recognized by analyzing this collection.

S3: selecting a prediction model matching each of the sub-requests respectively, and predicting the input data by means of the selected prediction model respectively to obtain a prediction result corresponding to each of the sub-requests.

It is unable to make a prediction by using the same prediction model because different sub-requests may have different recognition accuracies and methods for features. In this embodiment, corresponding prediction models may be obtained by training in advance for different sub-requests in the feature prediction system, and these prediction models may be available for use by the aforementioned model layer. In this way, after the application layer receives the feature prediction request and recognizes the sub-requests included in the feature prediction request, a prediction model matching each of sub-requests may be respectively select by means of the model layer, and the input data are predicted by means of the selected prediction model respectively, to obtain the prediction result corresponding to each of the sub-requests.

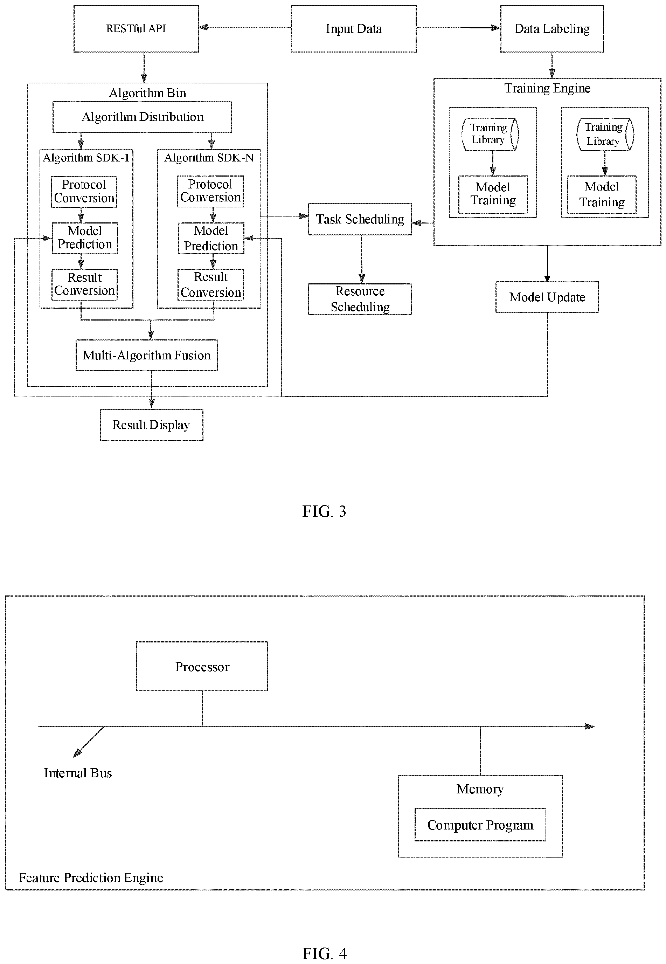

Specifically, referring to FIG. 2 and FIG. 3, the model layer may include an algorithm distribution module and edge intelligent applications (or algorithm bins) comprised of different algorithm Software Development Kits (SDKs). Different algorithm SDKs may include different prediction models. After receiving each of the sub-requests from the application layer, the model layer may select a plurality of target algorithm SDKs from a large number of algorithm SDKs according to types of the sub-requests, wherein the plurality of target algorithm SDKs matching types with the sub-requests, and predict the corresponding sub-requests respectively by means of the prediction models in the plurality of target algorithm SDKs. When making predictions, the above input data may be inputted into different target algorithm SDKs respectively, such that the input data may be predicted by means of different prediction models, to obtain the prediction result corresponding to each of the sub-requests.

In one embodiment, considering that the prediction result corresponding to each of the sub-requests needs to be fused subsequently according to a preset fusion algorithm, when the input data are separately predicted by means of the selected prediction model, an execution order of each of the prediction models may be determined according to the preset fusion algorithm. In practical applications, the execution order may include parallel execution and/or serial execution. The execution order may be determined by a type of the preset fusion algorithm. Specifically, the preset fusion algorithm may include a voting fusion algorithm, a linear weighted fusion algorithm, a cross-fusion algorithm, a waterfall fusion algorithm, and a prediction fusion algorithm, etc. Different fusion algorithms have different modes of processing the prediction result, which determines the execution order of each of the prediction models. For example, for the voting fusion algorithm and the linear weighting fusion algorithm, generally a comprehensive analysis is made for the prediction result of each of the prediction models. In this case, each of the prediction models selected from the model layer may be executed in parallel. For the waterfall fusion algorithm, generally it is required to consider the prediction result of a current prediction model as candidate data inputted to a next prediction model. In this case, each of the prediction models selected from the model layer needs to be executed in serial. Of course, depending on different fusion algorithm, some prediction models likely need to be executed in parallel, and some prediction models may be executed in serial, which is not to be enumerated here. In this embodiment, after the execution order of each of the prediction models is determined, the input data may be respectively predicted according to the execution order.

In one embodiment, a format of the input data may not be consistent with a format required for a prediction model in each of the SDK algorithms because the input data generally are provided by users. In this case, before the input data are predicted, the format of the input data may be converted into an input format matching the current prediction model, and the converted input data may be inputted to the current prediction model. The conversion process of the format may be implemented by means of a protocol conversion adapter. In this way, it may be ensured that the prediction model can correctly recognize and analyze the input data.

In one embodiment, when each of the prediction models is trained, a RESTful API module in the application layer may receive imported training data, and the application layer may also include a data labeling module, which can label a feature type of the training data. In this way, the training data with the feature type labeled may be used as training samples for training each of the prediction models. The feature type may be determined according to actual situations. For example, for a defect recognition scene, the feature type may be a defect type such as cold-lap, fold, indentation, and zigzag fold. When performing feature labeling, labeling tools such as LabelImg may be employed to complete construction of the training samples.

In this embodiment, after a large number of training samples labelled are obtained, the prediction models may be obtained by training using these training samples. In practical applications, these prediction models may be trained based on certain classification algorithms, which may be, for example, support vector machines, random forest algorithms, larger entropy algorithms, and gradient boosted decision tree algorithms, etc.

It is to be noted that, referring to FIG. 2 and FIG. 3, the model layer may also include a model update module. The model update module may be configured to regularly obtain sample data with incorrect predictions or insufficient prediction accuracy and new sample data, and retrain the existing prediction models by using this part of sample data and actual prediction result obtained by manual correction, such that the trained prediction models can make accurate predictions for this part of sample data. In this way, accuracy of the prediction result can be guaranteed by continuously updating the prediction models that has been trained.

S5: fusing the prediction result corresponding to each of the sub-requests according to a preset fusion algorithm to obtain and display a final prediction result of the feature prediction request.

In this embodiment, after the prediction results of the sub-requests are obtained, these prediction results may be fused according to the preset fusion algorithm to provide a final prediction result to the user. In practical applications, different fusion algorithms may perform different fusion steps.

For example, when the voting fusion algorithm is selected, a target prediction result with the largest number of repetitions may be counted from the prediction results corresponding to the sub-requests, and the target prediction result may serve as the final prediction result of the feature prediction request. After the final prediction result is determined, the final prediction result may be displayed by means of a result display module in the application layer. In practical applications, the final prediction result may be displayed by means of acoustic optical devices, text messages, emails, and push notifications, etc.

For another example, when the linear weighted fusion algorithm is selected, a weight value may be respectively assigned to each of the prediction results, and an average of a numerical weight of each of the prediction results may be calculated according to the assigned weight value, and the prediction result corresponding to the average may be regarded as the final prediction result of the feature prediction request. Specifically, each prediction model may obtain a probability vector by calculating for the input data, wherein the probability vector may include a plurality of probability values, and each of the plurality of probability values may represent a possible prediction result. Finally, the prediction model may determine a prediction result with the maximum probability value as the prediction result of an output sub-request. In this application scenario, after each prediction model obtains each probability vector by means of calculation, a multiplication operation may be performed on the probability values included in the probability vectors and the weight values of the prediction models, and the probability vectors obtained after the multiplication operation are added together, to obtain a total probability vector. Next, dividing each vector value in the total probability vector by the total number of probability vectors, to obtain a weighted average value of each vector value. Finally, by filtering out the probability value having the maximum weighted average value, the final prediction result of the feature prediction request may be determined.

For yet another example, when the cross-fusion algorithm is selected, different prediction results may be displayed separately from different angles. Specifically, a union set of the prediction results corresponding to the sub-requests may be calculated, and the union set may be determined as the final prediction result of the feature prediction request. By means of this fusion algorithm, different prediction results may be displayed to the users in various aspects for their own choice. Of course, in practical applications, a plurality of different prediction results may be contradictory. In this case, after the union set of the prediction results is calculated, these contradictory prediction results may be eliminated, and the remaining prediction results may be provided to the users. When the contradictory prediction results are eliminated, all the plurality of contradictory prediction results may be eliminated, and a prediction result with a higher degree of confidence may be selected from the plurality of contradictory prediction results and retained.

For still another example, when the waterfall fusion algorithm is selected, the prediction result of the current prediction model may serve as candidate data, and the candidate data may be inputted together with the input data into a next prediction model. In this way, when the next prediction model predicts the input data, an auxiliary decision may be made by using the candidate data, to obtain the optimal final prediction result in a progressive manner.

For still another example, when the prediction fusion algorithm is selected, secondary training may be performed on the prediction results of the sub-requests. Specifically, the prediction results corresponding to the sub-requests may be used as secondary data, and training samples for secondary training may be constructed according to feedback data of the secondary data. The prediction results corresponding to the sub-request may be used as original sample data. The users can select data that they are interested in based on the sample data, or select data with a certain defect type from the sample data. In this way, the data selected by the users may be used as the aforementioned feedback data. The original sample data and the feedback data may jointly constitute the training samples for the secondary training. Subsequently, a two-layer prediction model may be obtained by training using the training samples, and the final prediction result of the feature prediction request may be obtained by means of the two-layer prediction model. The two-layer prediction model may be trained according to the model prediction modes described in Step S3, which is not to be repeated here.

In one embodiment, formats of the prediction results obtained by each of the prediction models may not be consistent with input formats of the fusion algorithms. In this case, the formats of the prediction results need to be converted to input formats, to match the preset fusion algorithms, and the converted preset results are fused according to the preset fusion algorithms. Specifically, an adapter for result conversion may be configured in each algorithm SDK. The adapter may be implemented in programming languages such as Java and Python, and may convert the data formats (such as JSON data format) of the prediction results into the input formats (such as XML format, binary stream format, and so on) of the preset fusion algorithms.

Generally it is required to assign hardware resources for an operation process when performing edge intelligence operation. However, generally the existing edge intelligence technologies can only bind the hardware resources to a specific operation process. Once this operation process is not executed, this part of hardware resources cannot be used by other operation processes, which will undoubtedly cause idleness and waste of resources. In this embodiment, the above platform layer may take charge of creation of tasks and scheduling of resources. Specifically, the platform layer may create corresponding tasks when training the prediction models and predicting the input data by means of the selected prediction models respectively, and assign required computing resources for the created tasks. The computing resources at least include CPU resources, GPU resources, and memory resources, and the callable computing resources may be provided by the aforementioned resource layer.

Specifically, after the platform layer creates a corresponding task, the platform layer may also monitor the created task, wherein monitored contents may include a running status of the task, service conditions of the hardware resources, and execution time of the task, etc. Various scheduling algorithms may be employed when the computing resources are scheduled for the task. Specifically, the GPU resources are taken as an example. In one embodiment, target number of GPUs required for the task may be counted, and the target number of GPUs may be assigned to the task. In another embodiment, in addition to focusing on the number of resources required for the task, generally it is also required to focus on locations of the resources. Specifically, the platform layer may obtain location information of the GPU, and determine the target location of the GPU required for the task according to the location information, and assign the GPU positioned at the target location to the task. For example, the location information of the GPU may be recorded in fixed-length bytes, and each bit in the bytes may represent a GPU, and a value of each bit may represent a current serviceable condition of the GPU. For example, the location information of the GPU may have 64 bits, wherein each bit represents a GPU, and 1 may indicate that the GPU at the current location is serviceable, and 0 indicates that the GPU at the current location is not serviceable. In this way, by means of the location information, the location and serviceable condition of each GPU may be clearly recorded. Subsequently, based on the number of GPUs required for the task and corresponding location description requirements, a plurality of matching GPUs may be selected out for use by the task. In another embodiment, the GPU may also have tag information. The tag information may comprise of one or more tags. The tag may be, for example, operating frequency, number of CUDA cores, video memory, operating temperature, location, and so on. In this way, by recognizing a target tag of the GPU required for the task, the GPU having the target tag in the tag information may be assigned to the task, such that the GPU meeting requirements is provided to the task. For example, when a certain task occupies a higher video memory, GPU resources with higher video memory may be assigned for the task. When a certain task requires a higher operating frequency, GPU resources with higher frequency may be selected.

In practical applications, the platform layer may be implemented by means of open Platform for AI (openPAI). Specifically, the openPAI may provide functions such as deep learning, machine learning, and large-scale GPU trunked dispatching for big data tasks, cluster monitoring, task monitoring, distributed storage, and so on. When the openPAI is operating, the openPAI may submit a job by calling an API interface of a REST Server by means of Web Portal, next the REST Server may interact with a Launcher to perform various jobs, and then a Launcher Server processes a job request and submits the job request to Hadoop YARN to carry out resource allocation and scheduling. The OpenPAI adds GPU support to the Hadoop YARN, such that the Hadoop YARN may use GPUs as computable resource scheduling. The Hadoop YARN takes charge of j ob management, and other static resources are managed by Kubernetes.

Referring to FIG. 2. the present disclosure also provides a feature prediction system, which includes an application layer, a model layer, a platform layer, and a resource layer.

The application layer is configured to receive a feature prediction request carrying input data, recognize sub-requests included in the feature prediction request, and display a final prediction result of the feature prediction request.

The model layer is configured to select a prediction model matching each of the sub-requests respectively, and predict the input data by means of the selected prediction model respectively to obtain a prediction result corresponding to each of the sub-requests; and fuse the prediction result corresponding to each of the sub-requests according to a preset fusion algorithm to obtain a final prediction result of the feature prediction request.

The platform layer is configured to create a corresponding task when training each of the prediction models and predicting the input data by means of the selected prediction model respectively, and assign required computing resources to the created task; wherein the computing resources at least include CPU resources, GPU resources, and memory resources.

The resource layer is configured to count current computing resources and provide the computing resources to a corresponding task in response to a scheduling request from the platform layer.

In one embodiment, the application layer is also configured to receive imported training data, and label feature types in the training data, to construct training samples for training each of the prediction models.

In one embodiment, the model layer is also configured to convert a format of the input data into an input format matching a current prediction model, and input the converted input data into the current prediction model.

Referring to FIG. 4, the present disclosure also provides a feature prediction engine, which includes a processor and a memory, wherein the memory is configured to store a computer program. When the computer program is executed by the processor, the above feature prediction method may be implemented.

As can be seen from the above technical solutions provided by the present disclosure, when a feature prediction request is received, sub-requests included in the feature prediction request may be recognized. Next, a prediction model matching each of the sub-requests may be selected from a plurality of prediction models obtained by pre-training, and each of the sub-requests may be respectively predicted by means of the selected prediction model, to obtain respective prediction results. Subsequently, to obtain the final prediction result of the feature prediction request, the obtained prediction results may be fused according to the preset fusion algorithm. In this way, by means of collaborative operation of the plurality of prediction models and the fusion of the plurality of prediction results, a prediction result with a higher precision can be obtained, and better meet the needs of edge intelligence.

The various embodiments in this specification are described in a progressive manner, and the same or similar parts between the various embodiments can be referred to each other, and each embodiment focuses on the differences from other embodiments. In particular, for the system and engine embodiments, both can be explained with reference to the introduction of the foregoing method embodiments.

It can be known from the foregoing implementations, those skilled in the art may clearly know that various implementations can be implemented by feat of software and necessary general hardware platform, or of course by means of hardware. Based on such an understanding, the foregoing technical solutions in essence or that part of contribution to the prior art may be embodied in the form of software products, which may be stored in computer-readable storage media, such as ROM/RAM, diskettes or optical disks and the like, including some instructions so that it is possible to execute embodiments or methods as recited in some parts of embodiments by a computer equipment (personal computers or servers, or network equipment, etc.).

The foregoing descriptions are merely preferred embodiments of the present disclosure, and are not intended to limit the present disclosure. Any modification, equivalent replacement and improvement made within the spirit and principle of the present disclosure shall fall into the protection scope of the present disclosure.

## Claims

1. A feature prediction method, the method comprising:
receiving a feature prediction request carrying input data, and recognizing sub-requests included in the feature prediction request;
selecting a prediction model matching each of the sub-requests respectively, and predicting the input data by means of the selected prediction model respectively to obtain a prediction result corresponding to each of the sub-requests; and
fusing the prediction result corresponding to each of the sub-requests according to a preset fusion algorithm to obtain and display a final prediction result of the feature prediction request.

2. The method according to claim 1, wherein the predicting the input data by means of the selected prediction model respectively comprising:
determining an execution order of each of the prediction models according to the preset fusion algorithm, and predicting the input data respectively according to the execution order; wherein the execution order comprising parallel execution and/or serial execution.

3. The method according to claim 2, wherein the predicting the input data by means of the selected prediction model respectively comprising:
when the execution order is the serial execution, determining the prediction result of a current prediction model as candidate data, and inputting the candidate data together with the input data into a next prediction model.

4. The method according to claim 1, wherein before predicting the input data by means of the selected prediction model respectively, the method further comprising:
converting a format of the input data into an input format matching a current prediction model, and inputting the converted input data into the current prediction model.

5. The method according to claim 1, wherein the fusing the prediction result corresponding to each of the sub-requests according to a preset fusion algorithm comprising:
converting a format of each of the prediction results into an input format to match the preset fusion algorithm, and fusing converted preset results according to the preset fusion algorithm.

6. The method according to claim 1, wherein the fusing the prediction result corresponding to each of the sub-requests according to a preset fusion algorithm comprising:
counting a target prediction result having a maximum number of repetitions from the prediction results corresponding to each of the sub-requests, and determining the target prediction result as the final prediction result of the feature prediction request; or
assigning a weight value respectively for each of the prediction results, and averaging a numerical weight of each of the prediction results according to the assigned weight value, and determining a prediction result corresponding to the average as the final prediction result of the feature prediction request; or
calculating a union set of the prediction results corresponding to each of the sub-requests, and determining the union set as the final prediction result of the feature prediction request.

7. The method according to claim 1 or 5, wherein the fusing the prediction result corresponding to each of the sub-requests according to a preset fusion algorithm comprising:
determining the prediction result corresponding to each of the sub-requests as secondary data, and constructing a training sample for secondary training according to the feedback of the secondary data; and
training by means of the training sample to obtain a two-layer prediction model, and predicting by means of the two-layer prediction model to obtain the final prediction result of the feature prediction request.

8. The method according to claim 1, further comprising:
when training each of the prediction models and predicting the input data by means of the selected prediction model respectively, creating a corresponding task, and assigning required computing resources to the created task; wherein the computing resources at least comprise central processing unit (CPU) resources, graphics processing unit (GPU) resources, and memory resources.

9. The method according to claim 8, wherein the assigning required computing resources to the created task comprising:
counting target number of GPUs required for the task, and assigning the target number of GPUs to the task; or
obtaining location information of the GPU, determining a target location of the GPU required for the task according to the location information, and assigning the GPU positioned at the target location to the task; or
obtaining tag information of the GPU, recognizing a target tag of the GPU required for the task, and assigning the GPU having the target tag in the tag information to the task.

10. A feature prediction system, comprising an application layer, a model layer, a platform layer, and a resource layer, wherein:
the application layer is configured to receive a feature prediction request carrying input data, recognize sub-requests included in the feature prediction request, and display a final prediction result of the feature prediction request;
the model layer is configured to select a prediction model matching each of the sub-requests respectively, and predict the input data by means of the selected prediction model respectively to obtain a prediction result corresponding to each of the sub-requests; and fuse the prediction result corresponding to each of the sub-requests according to a preset fusion algorithm to obtain a final prediction result of the feature prediction request;
the platform layer is configured to create a corresponding task when training each of the prediction models and predicting the input data by means of the selected prediction model respectively, and assign required computing resources to the created task; wherein the computing resources at least comprise CPU resources, GPU resources, and memory resources; and
the resource layer is configured to count current computing resources and provide the computing resources to a corresponding task in response to a scheduling request from the platform layer.

11. The system according to claim 10, wherein the application layer is further configured to receive imported training data, and label a feature type in the training data, to construct a training sample for training each of the prediction models.

12. The system according to claim 10, wherein the model layer is further configured to convert a format of the input data into an input format matching a current prediction model, and input the converted input data into the current prediction model.

13. A feature prediction engine, comprising a processor and a memory, wherein the memory is configured to store a computer program, and when the computer program is executed by the processor, the method according to any one of claims 1 to 9 is implemented.
